# EUROPÄISCHE PATENTSCHRIFT

(11) **EP 2 226 344 B1**
(45) Veröffentlichungstag und Bekanntmachung des Hinweises auf die Patenterteilung: **02.08.2017**
(21) Anmeldenummer: 10154983.0
(22) Anmeldetag: 01.03.2010
(51) Int. Cl.: C08G 18/48, C08G 18/66, C08G 18/72, C08G 18/76, C08G 18/79, C08G 18/12, C08G 18/36, C08G 18/40, C08G 18/63, C08L 75/08, C08J 9/00

(54) **Abriebbeständiger Polyurethanformkörper mit verbesserten Dauerbiegeeigenschaften**
Friction-resistant polyurethane form body with improved long-term bend resistance
Corps de formage en polyuréthane résistant à l'abrasion et doté de propriétés améliorées d'endurance à la flexion

(30) Priorität: 02.03.2009 EP 09154126
(43) Veröffentlichungstag der Anmeldung: 08.09.2010
(73) Patentinhaber: BASF SE, 67056 Ludwigshafen am Rhein (DE)
(72) Erfinder: Freidank, Daniel, 49448, Lemförde (DE); Mohmeyer, Nils, 49076, Osnabrück (DE); Emge, Andreas, 49448, Lemförde (DE); Ortalda, Marco, 10137, Torino (IT); Engel, Robert, 67346, Speyer (DE); Judat, Sonja, 67067, Ludwigshafen (DE); Holtze, Christian, 60325, Frankfurt (DE)
(74) Vertreter: BASF IP Association

(56) Entgegenhaltungen:
- EP-A1- 1 321 492
- DE-A1- 19 851 880
- US-A- 6 080 800

## Beschreibung

Die vorliegende Erfindung betrifft einen abriebfesten Polyurethanformkörper, der hergestellt werden kann durch Vermischen von (a) organischem Polyisocyanat mit (b) mindestens einer höhermolekularen Verbindung mit mindestens zwei reaktiven Wasserstoffatomen, (c) Kettenverlängerungsmittel und/oder Vernetzungsmittel, (d) gegebenenfalls Treibmittel, (e) Katalysator, (f) Wachsdispersion und (g) gegebenenfalls sonstigen Hilfsmitteln und/oder Zusatzstoffen zu einer Reaktionsmischung, Einbringen der Reaktionsmischung in eine Form und Ausreagieren lassen der Reaktionsmischung zum Polyurethanformkörper.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind, ohne den Rahmen der Erfindung zu verlassen.

Bei Polyurethanintegralschaumstoffen handelt es sich um Polyurethanformkörper mit kompakter Oberfläche und zelligem Kern. Polyurethanintegralschaumstoffe und ihre Herstellung sind seit langem bekannt und beispielsweise in Modern Shoemaking No.61: Solings, November 2001, Stephen Abbott and Mike George, Satra Technology Centre 2001 beschrieben. Polyurethanintegralschaumstoffe werden in unterschiedlichen Bereichen eingesetzt. Eine typische Verwendung ist die als Schuhsohle, zum Beispiel für Straßenschuhe, Sportschuhe, Sandalen und Stiefel aber auch im Bereich von Automobilinnenausstattung, beispielsweise als Lenkräder, Kopfstützen, Schaltknöpfe oder Stuhlarmlehnen.

Insbesondere bei Anwendungen im Schuhbereich werden besondere Anforderungen an gute mechanische Eigenschaften, wie Elastizität, Rückprallelastizität, Reißdehnung und Dauerbiegeeigenschaften gestellt. Zur Verbesserung der Abriebfestigkeit des Sohlenmaterials enthalten diese häufig ein Wachs, das in Pulverform zu der Reaktionsmischung zur Herstellung des Sohlenmaterials zugegeben wird. Solche Sohlenmaterialien auf Basis von abriebbeständigen Polyurethanformkörpern sind bekannt und beispielsweise in EP 957130 und DE 19851880 beschrieben.

Nachteilig an bekannten abriebfesten Polyurethanformkörpern ist, dass die Zugabe des Wachses die Dauerbiegeeigenschaften des Polyurethanformkörpers negativ beeinflusst. Darüber hinaus ist das Wachs in der Polyolkomponente nicht lagerstabil und setzt sich ab. Daher muss die Polyolkomponente direkt vor Verarbeitung homogenisiert werden.

Aufgabe der vorliegenden Erfindung war es, einen Abriebverbesserer zu liefern, der in einer Polyolkomponente lagerstabil ist. Weiter war es Aufgabe, einen abriebfesten Polyurethanformkörper zu liefern, der hervorragende Dauerbiegeeigenschaften aufweist.

Die erfindungsgemäße Aufgabe wurde durch eine Wachsdispersion gelöst. Weiter wird die erfindungsgemäße Aufgabe durch einen abriebfesten Polyurethanformkörper gelöst, der herstellbar ist, indem man (a) organisches Polyisocyanat mit (b) mindestens einer höhermolekularen Verbindung mit mindestens zwei reaktiven Wasserstoffatomen, (c) Kettenverlängerungsmittel und/oder Vernetzungsmittel, gegebenenfalls (d) Treibmittel, (e) Katalysator, (f) Wachsdispersion und (g) gegebenenfalls sonstigen Hilfsmitteln und/oder Zusatzstoffen zu einer Reaktionsmischung vermischt, die Reaktionsmischung in eine Form einbringt und zum Polyurethanformkörper ausreagieren lässt.

Dabei handelt es sich bei einem erfindungsgemäßen Polyurethanformkörper vorzugsweise um einen kompakten Polyurethanformkörper oder um einen Polyurethanintegralschaumstoff, besonders bevorzugt um einen Polyurethanintegralschaumstoff.

Als kompakter Formkörper im Sinn der Erfindung wird ein Formkörper verstanden, zu dessen Herstellung kein Treibmittel (c) zugegeben wird. Geringe Mengen an Wasser, die beispielsweise herstellungsbedingt in der Verbindung mit mindestens zwei reaktiven Wasserstoffatomen, (b) enthalten sind, werden dabei nicht als Treibmittel (c) verstanden.

Als Polyurethanintegralschaumstoffe im Sinn der Erfindung werden Polyurethan-Schaumstoffe nach DIN 7726 mit einer Randzone, die bedingt durch den Formgebungsprozess eine höhere Dichte als der Kern aufweist, verstanden. Die über den Kern und die Randzone gemittelte Gesamtrohdichte liegt dabei vorzugsweise über 0,08 g/cm³, besonders bevorzugt von 0,15 bis 0,75 g/cm³ und insbesondere von 0,25 bis 0,70 g/cm³.

Die zur Herstellung der erfindungsgemäßen Polyurethanformkörper verwendeten organischen und/oder modifizierten Polyisocyanate (a) umfassen die aus dem Stand der Technik bekannten aliphatischen, cycloaliphatischen und aromatischen zwei- oder mehrwertigen Isocyanate (Bestandteil a-1) sowie beliebige Mischungen daraus. Beispiele sind 4,4'-Metandiphenyldiisocyanat, 2,4'-Metandiphenyldiisocyanat, die Mischungen aus monomeren Metandiphenyldiisocyanaten und höherkernigen Homologen des Metandiphenyldiisocyanats (Polymer-MDI), Tetramethylendiisocyanat, Hexamethylendiisocyanat (HDI), Isophorondiisocyanat (IPDI), 2,4- oder 2,6-Toluylendiisocyanat (TDI) oder Mischungen der genannten Isocyanate.

Bevorzugt wird 4,4'-MDI verwendet. Das bevorzugt verwendete 4,4'-MDI kann 0 bis 20 Gew.-% 2,4' MDI und geringe Mengen, bis etwa 20 Gew.-%, allophanat-, carbodiimid- oder uretoniminmodifizierte Polyisocyanate enthalten. Es können auch geringe Mengen Polyphenylenpolymethylenpolyisocyanat (Polymer-MDI) eingesetzt werden. Die Gesamtmenge dieser hochfunktionellen Polyisocyanate sollte 5 Gew.-% des eingesetzten Isocyanats nicht überschreiten.

Die Polyisocyanatkomponente (a) wird bevorzugt in Form von Polyisocyanatprepolymeren eingesetzt. Diese Polyisocyanatprepolymere sind erhältlich, indem vorstehend beschriebene Polyisocyanate (a-1), beispielsweise bei Temperaturen von 30 bis 100°C, bevorzugt bei etwa 80°C, mit Polyolen (a-2), zum Prepolymer umgesetzt werden. Vorzugsweise wird zur Herstellung der erfindungsgemäßen Prepolymere 4,4'-MDI zusammen mit uretoniminmodifiziertem MDI und handelsüblichen Polyolen auf Basis von Polyestern, beispielsweise ausgehend von Adipinsäure, oder Polyethern, beispielsweise ausgehend von Ethylenoxid und/oder Propylenoxid, verwendet.

Polyole (a-2) sind dem Fachmann bekannt und beispielsweise beschrieben im "Kunststoffhandbuch, Band 7, Polyurethane", Carl Hanser Verlag, 3. Auflage 1993, Kapitel 3.1. Vorzugsweise werden dabei als Polyole (a-2) die unter b) beschriebenen hochmolekularen Verbindungen mit gegenüber Isocyanate reaktiven Wasserstoffatomen eingesetzt. Besonders bevorzugt werden als Polyole (a-2) Polyetherole eingesetzt.

Gegebenenfalls werden den genannten Polyolen bei der Herstellung der Isocyanatprepolymere übliche Kettenverlängerer oder Vernetzungsmittel zugegeben. Solche Substanzen sind im Folgenden unter c) beschrieben. Besonders bevorzugt werden als Kettenverlängerer Monoethylenglycol, 1,4-Butandiol, Diethylenglycol, Dipropylenglycol und Tripropylenglycol eingesetzt.

Höhermolekulare Verbindungen b) mit mindestens zwei gegen Isocyanatgruppen reaktiven Wasserstoffatomen können beispielsweise Polyetherole oder Polyesterole sein.

Polyetherole werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das 2 bis 3 reaktive Wasserstoffatome gebunden enthält, oder durch kationische Polymerisation mit Lewis-Säuren, wie Antimonpentachlorid oder Borfluorid-Etherat aus einem oder mehreren Alkylenoxiden mit 2 bis 4 Kohlenstoffatomen im Alkylenrest. Geeignete Alkylenoxide sind beispielsweise, 1,3-Propylenoxid, 1,2- bzw. 2,3-Butylenoxid und vorzugsweise Ethylenoxid und 1,2-Propylenoxid. Des Weiteren kann Tetrahydrofuran Monomer eingesetzt werden. Weiter können als Katalysatoren auch Multimetallcyanidverbindungen, sogenannte DMC-Katalysatoren, eingesetzt werden. Die Alkylenoxide können einzeln, alternierend nacheinander oder als Mischungen verwendet werden. Bevorzugt werden Mischungen aus 1,2-Propylenoxid und Ethylenoxid, wobei das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen.

Als Startermolekül kommen Wasser oder 2- und 3-wertige Alkohole, wie Ethylenglykol, 1,2- und 1,3-Propandiol, Diethylenglykol, Dipropylenglykol, 1,4-Butandiol, Glycerin oder Trimethylolpropan in Betracht.

Die Polyetherpolyole, vorzugsweise Polyoxypropylen-polyoxyethylen-polyole, besitzen vorzugsweise eine Funktionalität von 1,7 bis 3 und Molekulargewichte von 1.000 bis 12.000, vorzugsweise von 1.500 bis 8.000 g/mol, insbesondere von 2.000 bis 6.000 g/mol.

Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250°C, vorzugsweise 180 bis 220°C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 :1 bis 1,8, vorzugsweise 1 :1,05 bis 1,2 polykondensiert.

Die erhaltenen Polyesterpolyole besitzen vorzugsweise eine Funktionalität von 2 bis 4, insbesondere von 2 bis 3, und ein Molekulargewicht von 480 bis 3000, vorzugsweise 1000 bis 3000 g/mol.

Als höhermolekulare Verbindungen b) mit mindestens zwei gegenüber Isocyanat reaktiven Wasserstoffatomen eignen sich ferner polymermodifizierte Polyole, vorzugsweise polymermodifizierte Polyesterole oder Polyetherole, besonders bevorzugt Pfropf-Polyether- bzw. Pfropf-Polyesterole, insbesondere Pfropf-Polyetherole. Hierbei handelt es sich um ein sogenanntes Polymerpolyol, welches üblicherweise einen Gehalt an, bevorzugt thermoplastischen, Polymeren von 5 bis 60 Gew.-%, bevorzugt 10 bis 55 Gew.-%, besonders bevorzugt 30 bis 55 Gew.-% und insbesondere 40 bis 50 Gew.-%, aufweist. Diese Polymerpolyesterole sind beispielsweise in WO 05/098763 und EP-A-250 351 beschrieben und werden üblicherweise durch radikalische Polymerisation von geeigneten olefinischen Monomeren, beispielsweise Styrol, Acrylnitril, (Meth)Acrylaten, (Meth)Acrylsäure und/oder Acrylamid, in einem als Pfropfgrundlage dienenden Polyesterol hergestellt. Die Seitenketten entstehen im Allgemeinen durch Übertragung der Radikale von wachsenden Polymerketten auf Polyesterole oder Polyetherole. Das Polymer-Polyol enthält neben dem Pfropfcopolymerisaten überwiegend die Homopolymere der Olefine, dispergiert in unverändertem Polyesterol bzw. Polyetherol.

In einer bevorzugten Ausführungsform werden als Monomere Acrylnitril, Styrol, bevorzugt Acrylnitril und Styrol verwendet. Die Monomere werden gegebenenfalls in Gegenwart weiterer Monomere, eines Makromers, d.h. eines ungesättigten, radikalisch polymerisierbaren Polyols, eines Moderators und unter Einsatz eines Radikal-Initiators, meist Azo- oder Peroxidverbindungen, in einem Polyesterol oder Polyetherol als kontinuierlicher Phase polymerisiert. Dieses Verfahren ist beispielsweise in DE 111 394, US 3 304 273, US 3 383 351, US 3 523 093, DE 1 152 536 und DE 1 152 537 beschrieben.

Während der radikalischen Polymerisation werden die Makromere mit in die Copolymerkette eingebaut. Dadurch bilden sich Blockcopolymere mit einem Polyester- bzw. Polyether- und einem Poly-acrylnitril-styrol-Block, welche in der Grenzfläche von kontinuierlicher Phase und dispergierter Phase als Phasenvermittler wirken und das Agglomerieren der Polymerpolyesterolpartikel unterdrücken. Der Anteil der Makromere beträgt üblicherweise 1 bis 20 Gew.-%, bezogen auf das Gesamtgewicht der zur Herstellung des Polymerpolyols eingesetzten Monomere.

Ist in der höhermolekularen Verbindung b) Polymerpolyol enthalten, liegt dies vorzugsweise zusammen mit weiteren Polyolen vor, beispielsweise Polyetherolen, Polyesterolen oder Mischungen aus Polyetherolen und Polyesterolen. Besonders bevorzugt ist der Anteil an Polymerpolyol größer als 5 Gew.-%, bezogen auf das Gesamtgewicht der Komponente (b). Die Polymerpolyole können beispielsweise, bezogen auf das Gesamtgewicht der Komponente (b) in einer Menge von 7 bis 90 Gew.-%, oder von 11 bis 80 Gew.-% enthalten sein. Besonders bevorzugt handelt es sich bei dem Polymerpolyol um Polymerpolyesterol oder Polymerpolyetherol.

Vorzugsweise werden als höhermolekulare Verbindung b) Mischungen, enthaltend Polyetherole eingesetzt. Dabei beträgt der Anteil von Polyetherolen an der höhenmolekularen Verbindung (b) vorzugsweise mindestens 30 Gew.-%, besonders bevorzugt mindestens 70 Gew.-% und insbesondere wird als höhermolekulare Verbindung (b) ausschließlich Polyetherol eingesetzt

Als Kettenverlängerungsmittel und/oder Vernetzungsmittel (c) werden Substanzen mit einem Molekulargewicht von vorzugsweise kleiner 500 g/mol, besonders bevorzugt von 60 bis 400 g/mol eingesetzt, wobei Kettenverlängerer 2 gegenüber Isocyanaten reaktive Wasserstoffatome und Vernetzungsmittel 3 gegenüber Isocyanat reaktive Wasserstoffatome aufweisen. Diese können einzeln oder bevorzugt in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, 1,2-, 1,3-, 1,4-Dihydroxycyclohexan, Diethylenglykol, Dipropylenglykol und vorzugsweise 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (c) Monoethylenglycol, 1,4-Butandiol, Glycerin oder Mischungen davon und insbesondere Monoethylenglycol oder Mischungen, enthaltend Monoethylenglycol, eingesetzt.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Komponenten (b) und (c), zum Einsatz.

Ferner sind bei der Herstellung von Polyurethanintegralschaumstoffen Treibmittel (d) zugegen. Diese Treibmittel d) können Wasser enthalten. Als Treibmittel (d) können neben Wasser noch zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale oder Mischungen daraus, beispielsweise cyclo/aliphatische Kohlenwasserstoffe mit 4 bis 8 Kohlenstoffatomen, oder Fluorkohlenwasserstoffe, wie Solkane^{®} 365 mfc der Firma Solvay Fluorides LLC. In einer bevorzugten Ausführungsform wird als Treibmittel eine Mischung enthaltend mindestens eines dieser Treibmittel und Wasser eingesetzt, insbesondere Wasser als alleiniges Treibmittel. Wird kein Wasser als Treibmittel eingesetzt, werden vorzugsweise ausschließlich physikalische Treibmittel verwendet.

Der Gehalt an Wasser beträgt in einer bevorzugten Ausführungsform von 0,1 bis 2 Gew.-%, bevorzugt 0,2 bis 1,5 Gew.-%, besonders bevorzugt 0,3 bis 1,2 Gew.-%, insbesondere 0,4 bis 1 Gew.-%, bezogen auf das Gesamtgewicht der Komponenten (a) bis (g).

In einer weiteren bevorzugten Ausführungsform werden zur Herstellung von Polyurethanintegralschaumstoffen bei der Umsetzung der Komponenten (a), (b) und gegebenenfalls (d) als zusätzliches Treibmittel Mikrohohlkugeln, die physikalisches Treibmittel enthalten, zugegeben. Die Mikrohohlkugeln können auch im Gemisch mit den vorstehend genannten Treibmitteln eingesetzt werden.

Die Mikrohohlkugeln bestehen üblicherweise aus einer Hülle aus thermoplastischem Polymer und sind im Kern mit einer flüssigen, niedrig siedenden Substanz auf Basis von Alkanen gefüllt. Die Herstellung solcher Mikrohohlkugeln ist beispielsweise in US 3 615 972 beschrieben. Die Mikrohohlkugeln weisen im Allgemeinen einen Durchmesser von 5 bis 50 µm auf. Beispiele für geeignete Mikrohohlkugeln sind unter dem Handelsnamen Expancell^{®} der Firma Akzo Nobel erhältlich.

Die Mikrohohlkugeln werden im Allgemeinen in einer Menge von 0,5 bis 5 Gew.-%, bezogen auf das Gesamtgewicht der Komponenten (b), (c) und (d) zugesetzt.

Als Katalysatoren (e) zur Herstellung der Polyurethanformkörper werden bevorzugt Verbindungen verwendet, welche die Reaktion der Hydroxylgruppen enthaltenden Verbindungen der Komponente (b) und gegebenenfalls (c) mit den organischen, gegebenenfalls modifizierten Polyisocyanaten (a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinnmaleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Vorzugsweise verwendet werden 0,001 bis 5 Gew.-%, insbesondere 0,05 bis 2 Gew.-% Katalysator bzw. Katalysatorkombination, bezogen auf das Gewicht der Komponente (b).

Unter einer Wachsdispersion (f) wird im Rahmen der Erfindung die stabile Verteilung eines Wachses als dispergierte Phase in einem Dispersionsmittel mit Hilfe eines Emulgators verstanden. Stabil bedeutet in diesem Zusammenhang, dass sich die Dispersion bei Raumtemperatur innerhalb von 24 Stunden, vorzugsweise innerhalb von einer Woche und besonders bevorzugt innerhalb von 4 Wochen und insbesondere innerhalb von 8 Wochen nicht entmischt. Die dispergierte Phase weist dabei einen mittleren Teilchendurchmesser von 0,01µm bis 500µm, vorzugsweise 0,1µm bis 100µm und insbesondere 0,5µm bis 20µm auf. Dabei sind mindestens 80 Gew.-% der Teilchen der dispergierten Phase im Teilchengrößenbereich von 0,01µm bis 500µm.

Als Wachse werden Substanzen bezeichnet, die bei 20 °C knetbar oder fest bis brüchig hart sind, bei 20 °C eine kristalline bis teilkristalline Struktur aufweisen, bei Temperaturen von 40 bis 180 °C, vorzugsweise 50 bis 100 °C ohne Zersetzung schmelzen, 10 °C oberhalb des Schmelzpunktes eine Viskosität von kleiner 1000 mPas aufweisen sowie unter leichtem Druck polierbar sind.

Beispiele für Wachse sind natürliche Wachse, die beispielsweise Ester von organischen Säuren mit 7 bis 100 Kohlenstoffatomen, beispielsweise Fettsäuren, mit langkettigen, primären Alkoholen, beispielsweise mit 5 bis 150 Kohlenstoffatomen, enthalten oder daraus bestehen, chemisch modifizierte Wachse und synthetische Wachse. Beispiele für natürliche Wachse sind Baumwollwachs, Carnaubawachs, Candelillawachs, Espartowachs, Guarumawachs, Japanwachs, Korkwachs, Montanwachs, Ouricurywachs, Reiskeimölwachs, Zuckerrohrwachs, Bienenwachs, Bürzeldrüsenfett, Wollwachs, Schellackwachs, Walrat, Mikrowachse, Ceresin und Ozokerit. Beispiele für chemisch modifizierte Wachse sind hydrierte Jojobawachse, Montanwachs oder Sasolwachse. Beispiele für synthetische Wachse sind Polyalkylenwachse, wie Polyolefinwachse, Polyethylenwachse und Polypropylenwachse, Polyethylenglycolwachse und Amidwachse. Vorzugsweise werden als Wachse synthetische Wachse, insbesondere Polyethylenwachse eingesetzt.

Die Wachse haben dabei vorzugsweise ein gewichtsmittleres Molekulargewicht von 1000 bis 5000 g/mol.

Diese Wachse werden vorzugsweise in mindestens einer höhermolekularen Verbindung mit mindestens zwei gegenüber Isocyanaten reaktiven Wasserstoffen dispergiert. Als Emulgator kann dabei jede emulgierend wirkende Verbindung eingesetzt werden, die zu der oben genannten Dispersion führt. Bei diesen Dispersionsmitteln handelt es sich vorzugsweise um Copolymere, die Molekülteile aufweisen, welche mit dem eingesetzten Wachs kompatibel sind und Molekülteile, welche mit der dispergierten Phase verträglich sind.

Vorzugsweise wird als Emulgator ein Copolymer (C) mit einer Funktionalität gegenüber Isocyanat von mindestens 4 und einem Molekulargewichte von 20.000 bis 500.000 g/mol eingesetzt. Vorzugsweise ist das Copolymer (C) aufgebaut aus wenigstens einem α,β-ethylenisch ungesättigten Monomer und wenigstens einem ungesättigten Polyetherpolyol. Dabei sind diese Copolymere bzw. Dispersionen der Copolymere in Polyether oder Polyesterol bei 80°C flüssig.

In einer bevorzugten Ausführungsform entspricht das wenigstens eine α,β-ethylenisch ungesättigte Monomer der allgemeinen Formel (I) 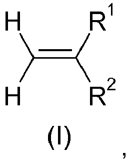 worin
- R¹: C₁-C₃₀-Alkyl, C₂-C₃₀-Alkenyl, C₂-C₃₀-Alkinyl, C₁-C₃₀-Heteroalkyl, substituiertes oder unsubstituiertes C₅-C₃₀-Aryl, substituiertes oder unsubstituiertes C₅-C₃₀-Heteroaryl oder funktionelle Gruppe ausgewählt aus -(C=O)-O-R³ oder -(C=O)-NH-R⁴ mit R³ und R⁴ ausgewählt aus H, C₁-C₃₀-Alkyl, C₂-C₃₀-Alkenyl, C₂-C₃₀-Alkinyl, C₁-C₃₀-Heteroalkyl, substituiertem oder unsubstituiertem C₅-C₃₀-Aryl, substituiertem oder unsubstituiertem C₅-C₃₀-Heteroaryl und
- R²: H, C₁-C₃₀-Alkyl, C₂-C₃₀-Alkenyl, C₂-C₃₀-Alkinyl, C₁-C₃₀-Heteroalkyl, substituiertes oder unsubstituiertes C₅-C₃₀-Aryl oder substituiertes oder unsubstituiertes C₅-C₃₀-Heteroaryl
bedeuten.

Bevorzugt bedeuten in der allgemeinen Formel (I)
- R¹: substituiertes oder unsubstituiertes C₅-C₃₀-Aryl, beispielsweise Benzyl oder Naphthyl, substituiertes oder unsubstituiertes C₅-C₃₀-Heteroaryl oder funktionelle Gruppe ausgewählt aus -(C=O)-O-R³ oder -(C=O)-NH-R⁴ mit R³ und R⁴ ausgewählt aus C₁-C₃₀-Alkyl, insbesondere C₁₂-C₃₀-Alkyl, oder C₂-C₃₀-Alkenyl, insbesondere C₁₂₋C₃₀-Alkenyl und
- R²: H, C₁-C₁₂-Alkyl, beispielsweise Methyl, Ethyl, Propyl, Butyl.

Heteroatome sind beispielsweise ausgewählt aus N, O, P, S.

In einer ganz besonders bevorzugten Ausführungsform ist das α,β-ethylenisch ungesättigte Monomer ausgewählt aus der Gruppe bestehend aus Styrol, α-Methylstyrol, Acrylnitril, Acrylaten, Acrylsäureestern oder Methacrylsäureestern oder Acrylsäureamiden oder Methacrylsäureamiden von gesättigten Fettsäuren, beispielsweise Laurinsäure C₁₁H₂₃COOH, Tridecansäure C₁₂H₂₅COOH, Myristinsäure C₁₃H₂₇COOH, Pentadecansäure C₁₄H₂₉COOH, Palmitinsäure C₁₅H₃₁COOH, Margarinsäure C₁₆H₃₃COOH, Stearinsäure C₁₇H₃₅COOH, Nonadecansäure C₁₈H₃₇COOH, Arachinsäure C₁₉H₃₉COOH, Behensäure C₂₁H₄₃COOH, Lignicerinsäure C₂₃H₄₇COOH, Cerotinsäure C₂₅H₅₁COOH, Melissinsäure C₂₉H₅₉COOH, Tubercolostearinsäure i-C₁₈H₃₇COOH, oder ungesättigten Fettsäuren, beispielsweise Palmitoleinsäure C₁₅H₂₉COOH, Ölsäure C₁₇H₃₃COOH, Erucasäure C₂₁H₄₁COOH, Linolsäure C₁₇H₃₁COOH, Linolensäure C₁₇H₂₉COOH, Elaeostearinsäure C₁₇H₂₉COOH, Arachidonsäure C₁₉H₃₁COOH, Clupanodonsäure C₂₁H₃₃COOH, Docosahexaensäure C₂₁H₃₁COOH, und Mischungen davon.

Das im Copolymer (C) vorliegende ungesättigte Polyetherpolyol ist in einer bevorzugten Ausführungsform ein ungesättigtes Polyadditionsprodukt von wenigstens einem mehrwertigen Alkohol, beispielsweise Zuckern, wie hydrolysierte Stärke, Glukosesirup, Sorbitol, Saccharose, Pentaerythrit, Dipentaerythrit, Tripentaerythrit, Glycerin, Trimethylolpropan, einem mehrwertigen Amin, beispielsweise thylendiamin, Diethylentriamin, 1,3-Propylendiamin, 1,3-Butylendiamin, 1,4-Butylendiamin, 1,2-, 1,4-, 1,5- und 1,6-Hexamethylendiamin, Phenylendiamin, 2,3-, 2,4- und 2,6-Toluylendiamin, vicinale Toluylendiamine, 4,4'-, 2,4'- und 2,2'-Diaminodiphenylmethan, Alkanolamin, wie Ethanolamin, N-Methyl- und N-Ethylethanolamin, Diethanolamin, N-Methyl-, N-Ethyl-diethanolamin, Triethanolamin, Ammoniak, Kondensate aus Aceton oder Formaldehyd mit Phenol oder mehrfunktionelle Alkohole, abgeleitet von Polymeren, die aus hydroxyfunktionellen Monomeren aufgebaut sind, wie Polymere aus Hydroxyethylacrlat, Hydroxymethylacrylat, Hydroxyethylmethacrylat, Hydroxymethylmethacrylat, Hydroxypropylacrylat, Hydroxyproplylmethacrylat oder Copolymere aus diesen Monomeren, wenigstens einem Alkylenoxid, beispielsweise Ethylenoxid, Propylenoxid, Butylenoxid und/oder Pentylenoxid und wenigstens einem ungesättigten Monomeren, beispielsweise mit wenigstens einer Isocyanatgruppe substituiertes Styrol oder α-Methylstyrol, insbesondere Meta-isopropenylbenzylisocyanat, beispielsweise Acrylsäure, Acrylsäurechlorid, Metacrylsäure, Metacrylsäurechlorid, Fumarsäure, Maleinsäureanhydrid, vinylisch ungesättigte Epoxide wie zum Beispiel Acryloylglycidylether, Metacryloylglycidylether.

Ganz besonders bevorzugte Copolymere (C) sind beispielsweise Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 1:1:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 1:2:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 2:2:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 4:4:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 4:4:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 4:4:1) mit niedrigerem Molekulargewicht, Copolymere aus Styrol, einem ungesättigten Polyetherpolyol aus Sorbitol, Propylenoxid, Ethylenoxid und meta-Isopropenylbenzylisocyanat (Massenverhältnis 8:1) Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 8:8:1) mit niedrigerem Molekulargewicht, Copolymere aus Styrol, Stearylacrylat, einem ungesättigten Polyetherpolyol aus Sorbitol, Propylenoxid, Ethylenoxid und meta-Isopropenylbenzylisocyanat (Massenverhältnis 1:1:1), Copolymere aus Stearylacrylat, einem ungesättigten Polyetherpolyol aus Sorbitol, Propylenoxid, Ethylenoxid und meta-Isopropenylbenzylisocyanat (Massenverhältnis 1:1:1), Copolymere aus Butylacrylat, Stearylacrylat, einem ungesättigten Polyetherpolyol aus Sorbitol, Propylenoxid, Ethylenoxid und meta-Isopropenylbenzylisocyanat (Massenverhältnis 1:1:1), Copolymere aus Stearylacrylat, Hydroxyethylacrylat, einem ungesättigtem Polyetherpolyol aus Hydroxyethylacrylat, Diisocyanat und Polyetherpolyol, Copolymere aus Stearylacrylat, Hydroxypropylacrylat, einem ungesättigtem Polyetherpolyol aus Hydroxyethylacrylat, Diisocyanat und Polyetherpolyol, Copolymere aus Stearylacrylat, Styrol und einem ungesättigtem Polyetherpolyol aus Hydroxyethylacrylat, Diisocyanat und Polyetherpolyol, Copolymere aus Stearylacrylat, Acrylnitril und einem ungesättigtem Polyetherpolyol aus Hydroxyethylacrylat, Diisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, einem ungesättigtem Polyetherpolyol aus Hydroxyethylacrylat, Diisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, Styrol, einem ungesättigtem Polyetherpolyol aus Hydroxyethylacrylat, Diisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, Acrylnitril, einem ungesättigtem Polyetherpolyol aus Hydroxyethylacrylat, Diisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, einem ungesättigtem Polyetherpolyol aus meta-Isopropenylbenzylisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, Styrol, einem ungesättigtem Polyetherpolyol aus meta-Isopropenylbenzylisocyanat und Polyetherpolyol.

Insbesondere bevorzugt sind Copolymere aus Styrol, Stearylacrylat und einen ungesättigten Polyetherpolyol aus Sorbitol, Propylenoxid, Ethylenoxid und meta-Isopropenylbenzylisocyanat
Bevorzugte ungesättigte Polyetherole haben ein Funktionalität von 2 bis 8 und ein Molekulargewicht Mw von 2.000g/mol bis 50.000 g/mol.

Diese erfindungsgemäß als Copolymere (C) geeigneten Polymere weisen vorzugsweise ein Molekulargewicht im Bereich von 10.000 bis 1.000.000 g/mol, besonders bevorzugt von 20.000 bis 200.000, insbesondere von 30.000 bis 80.000 g/mol auf. Üblicherweise werden die Molekulargewichte mittels GPC bestimmt, als Standard wird Polystyrol eingesetzt.

Der Emulgator wird dabei vorzugsweise mit 0,5 bis 20 Gew.-%, Bezogen auf das Gewicht des eingesetzten Wachses verwendet.

Der Anteil des Wachses, bezogen auf das Gesamtgewicht der höhermolekularen Verbindung b) und der Wachsdispersion f) beträgt vorzugsweise 0,1 bis 10 Gew.-%, besonders bevorzugt 0,2 bis 5 und insbesondere 0,5 bis 3 Gew.-%, bezogen auf das Gesamtgewicht der Komponenten b) bis g).

Der Reaktionsmischung zur Herstellung der Polyurethanformkörper können gegebenenfalls auch noch Hilfsmittel und/oder Zusatzstoffe (g) zugegeben werden. Genannt seien beispielsweise oberflächenaktive Substanzen, Schaumstabilisatoren, Zellregler, Trennmittel, Gummivulkanisationshilfsmittel, Füllstoffe, Farbstoffe, Pigmente, Hydrolyseschutzmittel, geruchsabsorbierende Substanzen und fungistatische und/oder bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure, und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), eingesetzt.

Als geeignete Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A-3 607 447 offenbart, oder Gemischen aus einer Iminoverbindung, dem Metallsalz einer Carbonsäure und gegebenenfalls einer Carbonsäure, wie beispielsweise in US 4 764 537 offenbart.

Als Füllstoffe, insbesondere verstärkend wirkende Füllstoffe, sind die an sich bekannten, üblichen organischen und anorganischen Füllstoffe, Verstärkungsmittel, Beschwerungsmittel, Beschichtungsmittel usw. zu verstehen. Im einzelnen seien beispielhaft genannt: anorganische Füllstoffe, wie silikatische Mineralien, beispielsweise Schichtsilikate, wie Antigorit, Bentonit, Serpentin, Hornblenden, Amphibole, Chrisotil und Talkum, Metalloxide, wie Kaolin, Aluminiumoxide, Titanoxide, Zinkoxid und Eisenoxide, Metallsalze wie Kreide und Schwerspat, und anorganische Pigmente, wie Cadmiumsulfid, Zinksulfid sowie Glas u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metall- und insbesondere Glasfasern verschiedener Länge, die gegebenenfalls geschlichtet sein können. Als organische Füllstoffe kommen beispielsweise in Betracht: Russ, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (c), zugegeben, wobei jedoch der Gehalt an Matten, Vliesen und Geweben aus natürlichen und synthetischen Fasern Werte bis 80 Gew.-% erreichen kann.

Als Weichmacher und Hydrolyseschutzmittel kann beispielsweise γ-Butyrolycton eingesetzt werden.

Die Komponenten (a) bis (g) werden zur Herstellung eines erfindungsgemäßen Polyurethanformkörpers in solchen Mengen miteinander vermischt, dass das Äquivalenzverhältnis von NCO-Gruppen der Polyisocyanate (a) zur Summe der reaktiven Wasserstoffatome der Komponenten (b), (c) und (d) 1 : 0,8 bis 1 : 1,25, vorzugsweise 1 : 0,9 bis 1 : 1,15 beträgt.

Die erfindungsgemäßen Polyurethanintegralschaumstoffe werden vorzugsweise nach dem one-shot-Verfahren mit Hilfe der Niederdruck- oder Hochdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben von Piechota und Röhr in "Integralschaumstoff", Carl-Hanser-Verlag, München, Wien, 1975, oder im "Kunststoffhandbuch", Band 7, Polyurethane, 3. Auflage, 1993, Kapitel 7.

Die Ausgangskomponenten (a) bis (g) werden dazu vorzugsweise bei einer Temperatur von 15 bis 90 °C, besonders bevorzugt von 25 bis 55 °C gemischt und die Reaktionsmischung gegebenenfalls unter erhöhtem Druck in das geschlossene Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 160 °C, vorzugsweise 30 bis 120 °C, besonders bevorzugt 30 bis 60 °C. Dabei wird im Rahmen der Erfindung die Mischung der Komponenten (a) bis (g) bei Reaktionsumsätzen kleiner 90 %, bezogen auf die Isocyanatgruppen, als Reaktionsmischung bezeichnet.

Zur Herstellung der Polyurethanintegralschaumstoffe wird die Menge der in das Formwerkzeug eingebrachten Reaktionsmischung wird so bemessen, dass die erhaltenen Formkörper aus Integralschaumstoffen eine Dichte von vorzugsweise 0,08 bis 0,75 g/cm³, besonders bevorzugt von 0,15 bis 0,75 g/cm³ und insbesondere von 0,25 bis 0,70 g/cm³ aufweisen. Die Verdichtungsgrade zur Herstellung der erfindungsgemäßen Polyurethanintegralschaumstoffe liegen im Bereich von 1,1 bis 8,5, vorzugsweise von 1,8 bis 7,0.

Erfindungsgemäße Polyurethanformkörper, insbesondere Polyurethanintegralschaumstoffe werden vorzugsweise als Schuhsohle, zum Beispiel für Straßenschuhe, Sportschuhe, Sandalen und Stiefel aber auch im Bereich von Automobilinnenausstattung, beispielsweise als Lenkräder, Kopfstützen oder Schaltknöpfe oder als Stuhlarmlehnen verwendet. Dabei weisen erfindungsgemäße Polyurethanformkörper eine gute Abriebbeständigkeit und hervorragende Dauerbiegeeigenschaften von kleiner 4 mm gemäß DIN 53543 auf.

Im Folgenden wird die Erfindung im Rahmen von Beispielen verdeutlicht:

### Ausgangsmaterialien

- Polyol 1:: Glycerin-gestartetes Polyetherpolyol mit OH Zahl von 35 und überwiegend primären OH-Gruppen (Zusammensetzung 85% Propylenoxid, 15 % Ethylenoxid)
- Polyol 2:: Propylenglcyol-gestartetes Polyetherpolyol mit OH Zahl von 29 und überwiegend primären OH-Gruppen (Zusammensetzung 80% Propylenoxid, 20 % Ethylenoxid)
- Polyol 3:: Vinylisch ungesättigtes Sorbitol-gestartetes Polyetherpolyol mit OH Zahl von 20 und überwiegend primären OH-Gruppen (Zusammensetzung 83% Propylenoxid, 17 % Ethylenoxid)
- Kettenverlängerungsmittel:: 1,4-Butandiol
- Vernetzer:: Glycerin
- Katalysator 1:: Triethylendiamin
- Katalysator 2:: Niax Catalyst C77
- Katalysator 3:: Fomrez UL28
- Schaumstabilisator:: DC 193^{®} der Firma Dow Corning, silikonbasiert
- Treibmittel:: Wasser
- Isocyanat 1:: Prepolymer (50 Gew.-Teile 4,4' Diisocyanatodiphenylmethan (Rein-MDI), 2 Gew.-Teile uretoniminmodifiziertes Rein-MDI, 46 Gew.-Teilen eines linearen propylenglycol-gestarteten Polyoxypropylenetherols (OHZ 55 mg KOH/mg), 2 Gew.-Teilen Tripropylenglycol

### Beispiel Herstellung polymerer Emulgator

Der polymere Emulgator A wird über radikalische Polymerisation in Polyol 1 erhalten. In einem Dreihalskolben mit Wasserkühlung, Rührer und Temperaturfühler wird eine Mischung aus folgenden Komponenten angesetzt: 49,5 Gew.-Teile Polyol 1, 0,5 Gew.-Teile Dodecanthiol, 8,3 Gew.-Teile Stearylacrylat, 16,7 Gew.-Teile Styrol, 24,5 Gew.-Teile Polyol 3; 0,5 Gew.-Teile Azoisobutyronitril. Die Reaktionsmischung wird unter Rühren auf 60°C erhitzt und für 24 Stunden gerührt. Die Restmonomere werden bei 135°C unter Rühren abdestilliert.

### Beispiel Herstellung Polyethylen-Wachs-Dispersion B

Bestandteile der Formulierung zur Dispersionsherstellung: 33,75 Gew.-Teile Polyethylen-Wachs (Mw < 3000 g/mol), 52,75 Gew.-Teile Polyol 1, 13,5 Gew.-Teile polymerer Emulgator A.
1) Die Dispersionsbestandteile werden in einem Rührbehälter bei beliebiger Temperatur / in beliebigem Aggregatszustand vorgelegt. Wenn das Vorlegen bei Umgebungstemperatur wegen hoher Viskosität nicht möglich ist, werden die Edukte vorgewärmt.
2) Falls die Dispersionsbestandteile nicht schon bei dieser Temperatur vorgelegt werden, erfolgt das Aufheizen des Komponentengemisches unter Rühren auf 150 °C bzw. auf eine Temperatur, die höher als die Schmelztemperatur der dispersen Phase ist.
3) Die Mischung wird fünf theoretischen Passagen über die Emulgiermaschine (Zahnkranzdispergiermaschine, Umfangsgeschwindigkeit ca. 20 m/s) im Kreis gefahren, wobei das gesamte System auf 150°C temperiert ist.
4) Die Kreisfahrweise wird ausgeschaltet und das Material aus dem Vorlagebehälter über die temperierte (150 °C) Zahnkranzdispergiermaschine mit einer Flussrate von 1,2 kg/h +/-20% über einen Doppelrohrkühler mit einer Kühlfläche von 0,04 m² bei einer Kühlrate von 60 K/Min ausgetragen. Das Kühlmedium hat dabei eine Temperatur von 15 °C, die Kühleraustrittstemperatur des Produktes beträgt 25 °C.

Die verwendete Polyolkomponente 1 besteht aus 15 Gew.-Teilen Polyol 1, 71 Gew.-Teilen Polyol 2, 9 Gew.-Teilen Kettenverlängerungsmittel, 2 Gew.-Teilen Katalysator 1, 0,4 Gew.-Teilen Katalysator 2, 0,05 Gew.-Teilen Katalysator 3, 0,6 Gew.-Teilen Schaumstabilisator und 0,36 Gew.-Teilen Treibmittel

Die verwendete Polyolkomponente 2 besteht aus 15 Gew.-Teilen Polyol 1, 71 Gew.-Teilen Polyol 2, 9 Gew.-Teilen Kettenverlängerungsmittel, 2 Gew.-Teilen Katalysator 1, 0,4 Gew.-Teilen Katalysator 2, 0,05 Gew.-Teilen Katalysator 3, 0,6 Gew.-Teilen Schaumstabilisator, 0,36 Gew.-Teilen Treibmittel und 1 Gew.-Teil Polyethylen-Wachs

Die verwendete Polyolkomponente 3 besteht aus 15 Gew.-Teilen Polyol 1, 71 Gew.-Teilen Polyol 2, 9 Gew.-Teilen Kettenverlängerungsmittel, 2 Gew.-Teilen Katalysator 1, 0,4 Gew.-Teilen Katalysator 2, 0,05 Gew.-Teilen Katalysator 3, 0,6 Gew.-Teilen Schaumstabilisator, 0,36 Gew.-Teilen Treibmittel und 3 Gew.-Teilen Polyethylen-Wachs-Dispersion B

### Versuche:

### Reaktionsmischung 1:

100 Gew.-Teile der Polyolkomponente 1 (45 °C) und 89 Gew.-Teile von Isocyanat 1 (40 °C) wurden mit einer Niederdruckschuhmaschine (EMB) vermischt und diese Mischung in eine auf 35 °C temperierte Aluminiumform (200 x 200 x 10 mm) gegeben, die Form geschlossen und der so hergestellte Polyurethanintegralschaum nach 4 Minuten entformt.

### Reaktionsmischung 2:

100 Gew.-Teile der Polyolkomponente 2 (45 °C) und 90 Gew.-Teile von Isocyanat 1 (40 °C) wurden mit einer Niederdruckschuhmaschine (EMB) vermischt und diese Mischung in eine auf 35 °C temperierte Aluminiumform (200 x 200 x 10 mm) gegeben, die Form geschlossen und der so hergestellte Polyurethanintegralschaum nach 4 Minuten entformt.

### Reaktionsmischung 3 (erfindungsgemäß):

100 Gew.-Teile der Polyolkomponente 3 (45 °C) und 90 Gew.-Teile von Isocyanat 1 (40 °C) wurden mit einer Niederdruckschuhmaschine (EMB) vermischt und diese Mischung in eine auf 35 °C temperierte Aluminiumform (200 x 200 x 10 mm) gegeben, die Form geschlossen und der so hergestellte Polyurethanintegralschaum nach 4 Minuten entformt.

Die mechanischen Eigenschaften der hergestellten Probe wurden nach 24 Stunden Lagerung gemäß den DIN EN ISO 1798, 3386, 53573 und ISO 34-1 bestimmt und sind in Tabelle 1 aufgelistet.

**Tabelle 1**

| | Reaktionsmischung 1 | Reaktionsmischung 2 | Reaktionsmischung 3 |
|---|---|---|---|
| Raumgewicht (g/L) | 650 | 650 | 650 |
| Härte (Shore A) | 49 | 51 | 50 |
| Zugfestigkeit (N/mm²) | 4,5 | 4,8 | 5,1 |
| Bruchdehnung (%) | 505 | 511 | 506 |
| Weiterreißfestigkeit (N/mm) | 10,0 | 8,9 | 10,8 |
| Rückprallelastizität (%) | 50 | 50 | 48 |
| Abrieb bei 10N (mg) | > 300 | 121 | 146 |
| Dauerbiegeeigenschaft: Risslängenwachstum nach 100.000 Zyklen (mm) | < 4 | 6,3 | 1,5 |

Tabelle 1 zeigt, dass der Schaumstoff der erfindungsgemäßen Reaktionsmischung 3 eine zur Referenz (Reaktionsmischung 1) vergleichbare Mechanik aufweist. Des Weiteren ist das Abriebverhalten mit nur 146 mg im Gegensatz zu > 300 mg deutlich verbessert. Im Gegensatz zur Reaktionsmischung 2 weist die erfindungsgemäße Reaktionsmischung 3 auch die geforderten Dauerbiegeeigenschaften von 1,5 mm auf.

## Patentansprüche

1. Verfahren zur Herstellung eines abriebbeständigen Polyurethanformkörpers, bei dem man
a) organisches Polyisocyanat mit
b) Polyetherole, Polyesterole und/oder polymermodifizierte Polyole,
c) Kettenverlängerungsmittel und/oder Vernetzungsmittel,
d) gegebenenfalls Treibmittel,
e) Katalysator,
f) Wachsdispersion und
g) gegebenenfalls sonstigen Hilfsmitteln und/oder Zusatzstoffen,
zu einer Reaktionsmischung vermischt, die Reaktionsmischung in eine Form ein- bringt und zum Polyurethanformkörper ausreagieren lässt, wobei die Wachsdispersion (f) eine Dispersion eines Polyethylenwachses in einer höhermolekularen Verbindung mit gegenüber Isocyanaten reaktiven Wasserstoffatomen mit einem Copolymer (C) als Emulgator ist, das Copolymer (C) aufgebaut ist aus wenigstens einem a,ß-ethylenisch ungesättigten Monomer und wenigstens einem ungesättigten Polyetherpolyol, und das Copolymer (C) eine Funktionalität gegenüber Isocyanat von mindestens 4 und ein Molekulargewicht von 20.000 bis 500.000 g/mol aufweist.

2. Verfahren nach Anspruch 1, **dadurch gekennzeichnet, dass** das Copolymer (C) eine Funktionalität gegenüber Isocyanat von mindestens 4 und ein Molekulargewicht von 20.000 bis 200.000 g/mol aufweist.

3. Verfahren nach einem der Ansprüche 1 oder 2, **dadurch gekennzeichnet, dass** die Wachsteilchen in der Wachsdispersion eine mittlere Teilchengröße von 0,01µm bis 500µm aufweisen.

4. Verfahren nach einem der Ansprüche 1 bis 3, **dadurch gekennzeichnet, dass** Treibmittel (d) eingesetzt wird und der Polyurethanformkörper ein Polyurethanschaumstoff ist.

5. Abriebbeständiger Polyurethanschaumstoff, erhältlich durch ein Verfahren nach einem der Ansprüche 1 bis 4.

6. Schuhsohle, enthaltend einen abriebbeständigen Polyurethanschaumstoff nach Anspruch 5.

## Claims

1. A process for the production of an abrasion-resistant polyurethane molding, by mixing
a) organic polyisocyanate with
b) polyetherols, polyesterols and/or polymer-modified polyols,
c) chain extender and/or crosslinking agent,
d) optionally blowing agent,
e) catalyst,
f) wax dispersion and
g) optionally other auxiliaries and/or additives to give a reaction mixture, introducing the reaction mixture into a mold and allowing same to complete reaction to give the polyurethane molding, where the wax dispersion (f) is a dispersion of a polyethylene wax in a relatively high-molecular-weight compound having hydrogen atoms reactive toward isocyanates with a copolymer (C) as emulsifier, the copolymer (C) is composed of at least one α,β-ethylenically unsaturated monomer and of at least one unsaturated polyether polyol, and the functionality of the copolymer (C) in relation to isocyanate is at least 4 and its molar mass is from 20 000 to 500 000 g/mol.

2. The process according to claim 1, wherein the functionality of the copolymer (C) in relation to isocyanate is at least 4 and its molar mass is from 20 000 to 200 000 g/mol.

3. The process according to claim 1 or 2, wherein the average particle size of the wax particles in the wax dispersion is from 0.01 µm to 500 µm.

4. The process according to any of claims 1 to 3, wherein blowing agent (d) is used and the polyurethane molding is a polyurethane foam.

5. An abrasion-resistant polyurethane foam obtainable by a process according to any of claims 1 to 4.

6. A shoe sole comprising an abrasion-resistant polyurethane foam according to claim 5.

## Revendications

1. Procédé de fabrication d'un corps moulé en polyuréthane résistant à l'abrasion, selon lequel
a) un polyisocyanate organique est mélangé avec
b) des polyéthérols, des polyestérols et/ou des polyols modifiés par un polymère,
c) des agents d'allongement de chaînes et/ou des agents de réticulation,
d) éventuellement des agents gonflants,
e) un catalyseur,
f) une dispersion de cire et
g) éventuellement d'autres adjuvants et/ou additifs, pour former un mélange réactionnel, le mélange réactionnel est introduit dans un moule et laissé réagir pour former le corps moulé en polyuréthane, la dispersion de cire (f) étant une dispersion d'une cire de polyéthylène dans un composé de poids moléculaire élevé contenant des atomes d'hydrogène réactifs avec les isocyanates avec un copolymère (C) en tant qu'émulsifiant, le copolymère (C) étant formé par au moins un monomère α,β-éthyléniquement insaturé et au moins un polyéther-polyol insaturé, et le copolymère (C) présentant une fonctionnalité par rapport aux isocyanates d'au moins 4 et un poids moléculaire de 20 000 à 500 000 g/mol.

2. Procédé selon la revendication 1, **caractérisé en ce que** le copolymère (C) présente une fonctionnalité par rapport aux isocyanates d'au moins 4 et un poids moléculaire de 20 000 à 200 000 g/mol.

3. Procédé selon l'une quelconque des revendications 1 ou 2, **caractérisé en ce que** les particules de cire dans la dispersion de cire présentent une taille de particule moyenne de 0,01 µm à 500 µm.

4. Procédé selon l'une quelconque des revendications 1 à 3, **caractérisé en ce qu'**un agent gonflant (d) est utilisé et le corps moulé de polyuréthane est une mousse de polyuréthane.

5. Mousse de polyuréthane résistante à l'abrasion, pouvant être obtenue par un procédé selon l'une quelconque des revendications 1 à 4.

6. Semelle de chaussure, contenant une mousse de polyuréthane résistante à l'abrasion selon la revendication 5.
